# EUROPÄISCHE PATENTSCHRIFT

(11) **EP 2 243 611 B1**
(45) Veröffentlichungstag und Bekanntmachung des Hinweises auf die Patenterteilung: **04.03.2015**
(21) Anmeldenummer: 10167152.7
(22) Anmeldetag: 17.03.2004
(51) Int. Cl.: B29C 70/46, B29C 44/12, B32B 37/00, B29C 70/08, B32B 37/14, B32B 7/10, B29L 31/30, B29L 31/60, B32B 37/26, B32B 38/06, B32B 38/00

(54) **Verfahren zur Herstellung eines Fahrzeug-Karosserieteils**
Method for manufacturing a vehicle body part
Procédé pour la fabrication d'une pièce de carosserie de véhicule

(30) Priorität: 20.03.2003 DE 10312465
(43) Veröffentlichungstag der Anmeldung: 27.10.2010
(62) Teilanmeldung aus: 04006360.4
(73) Patentinhaber: Webasto AG, 82131 Stockdorf (DE); Bayer Intellectual Property GmbH, 40789 Monheim (DE)
(72) Erfinder: Dichtl, Matthias, 82547, Eurasburg (DE); Kiesewetter, Frank, 82110, Germering (DE); Schwaighofer, Ralf, 83115, Neubeuern (DE); Mies, Detlef, 50189, Elsdorf (DE); Lammeck, Adolf, 53797, Lohmar (DE); Paul, Reiner, 42799, Leichlingen (DE)
(74) Vertreter: advotec.

(56) Entgegenhaltungen:
- EP-A2- 1 253 006
- EP-A2- 1 524 175
- WO-A1-00/20186
- WO-A1-99/16657
- DE-A1- 19 818 829
- DE-A1- 19 829 859
- DE-A1- 19 955 167
- US-A- 5 238 725
- US-A- 5 271 885

## Beschreibung

Die Erfindung betrifft ein Verfahren zur Herstellung eines Fahrzeug-Karosserieteils, insbesondere eines Fahrzeugdachs, nach dem Oberbegriff des Patentanspruches 1.

Ein als Verbundbauteil ausgeführtes Fahrzeug-Karosserieteil ist beispielsweise aus der DE 199 55 167 AI bekannt und zum Einsatz als vorgefertigtes Dachmodul ausgelegt. Dieses Fahrzeug-Karosserieteil ist in Sandwich-Bauweise hergestellt und umfasst ein als Außenschale dienendes, erstes Schichtpaket, das formgebend ist und mit einem als Innenschale dienenden, zweiten Schichtpaket verbunden ist. Die Außenschale umfasst eine feste Außenhaut aus Kunststoff, die mit einer als Träger dienenden Hartschaumschicht hinterfüttert ist.

Aus der DE 198 18 829 A1 geht ein schalldämmendes Wandelement und ein Verfahren zu dessen Herstellung hervor. Das Wandelement weist eine Begrenzungsschicht und ein wabenartiges Tragelement auf. Zwischen der Begrenzungsschicht und dem Tragelement ist eine Vermittlungsschicht zum Verschließen von Hohlkörpern des Tragelements und zum Ausbilden einer ebenen Unterlage für die Begrenzungsschicht vorgesehen. Das Verfahren umfasst das Auftragen der Vermittlungsschicht auf die Begrenzungsschicht und anschließend das Anordnen des Tragelements an der Vermittlungsschicht vor dessen Aushärtung.

In der Praxis kann es erforderlich sein, dass sich die Dicke bzw. die Geometrie der Hartschaumschicht über die Fläche des Karosserieteils ändert, was beispielsweise erforderlich ist, wenn Anbauteile, wie Haltegriffe, Lampen oder dergleichen, mit dem Karosserieteil verbunden werden sollen.

Die Herstellung eines als Verbundbauteil ausgeführten Fahrzeug-Karosserieteils, das eine Außenhaut und einen Träger umfasst, erfolgt bisher beispielsweise derart, dass eine tiefgezogene Außenhaut, die aus Aluminium, Stahl oder Kunststoff bestehen kann, in eine Form eingelegt wird und dann mittels eines Roboters ein Polyurethan/Glasfaser-Gemisch zur Ausbildung des Trägers in die Form eingetragen wird. Anschließend wird die Form geschlossen. Das Polyurethan/Glasfaser-Gemisch reagiert aus bzw. vernetzt, wodurch es aushärtet und gleichzeitig eine Haftung zu der Außenhaut aufbaut.

Alternativ kann ein als Verbundbauteil ausgebildetes Fahrzeug-Karosserieteil mit einer beispielsweise aus Papier gebildeten Wabenstruktur hergestellt werden, die einen Träger des Verbundbauteils bildet. Dies erfolgt derart, dass wiederum eine tiefgezogene Außenhaut in eine Form eingelegt wird, wobei gleichzeitig ein mit einem Glasvlies oder einer Glasmatte kaschierter, aus der Wabenstruktur gebildeter Kern beidseitig mit Polyurethan besprüht wird. Der besprühte und kaschierte Kern wird in die Form, in die die Außenhaut eingelegt wurde, eingebracht. Die Form wird dann geschlossen. Nun vernetzt das Polyurethan, so dass es sowohl eine Bindung zu der Außenhaut als auch zu dem Kern aufbaut.

Bei den vorstehend beschriebenen Verfahren zur Herstellung eines als Verbundbauteil ausgebildeten Fahrzeug-Karosserieteils besteht das Problem, dass sich Geometrieänderungen bzw. Dickenänderungen sowie Strukturen des Trägers auf der Außenhaut abzeichnen können.

Der Erfindung liegt die Aufgabe zugrunde, ein Verfahren zur Herstellung eines als Verbundbauteil ausgeführten Fahrzeug-Karosserieteils mit einer Außenwand und einem Träger zu schaffen, das eine Außenhaut mit einer homogenen Oberfläche gewährleistet.

Diese Aufgabe ist erfindungsgemäß durch das Verfahren mit den Merkmalen des Patentanspruches 1 gelöst.

Der Kern der Erfindung liegt mithin darin, zur Anbindung des gegebenenfalls Geometrieänderungen, wie Dickenänderungen, aufweisenden Trägers an die Außenhaut den Aufbau des Verbundbauteils mit einer durch die Begrenzungsschicht gebildeten Zwischenschicht zu versehen, mit der die Außenhaut hinterfüttert wird und die ein Abzeichnen der Geometrieänderungen des Trägers an der Außenseite der Außenhaut im Wesentlichen unterbindet. Die Herstellung des Trägers für die Außenhaut erfolgt bei dem Verfahren nach der Erfindung in zumindest zwei Schritten, wobei in einem Schritt der Werkstoff für die Begrenzungsschicht aufgetragen und in dem anderen Schritt die Kernstruktur über die Begrenzungsschicht an die Außenhaut angebunden wird. Die Anbindung der Begrenzungsschicht an die Außenhaut erfolgt durch die Vernetzung des die Begrenzungsschicht ausbildenden Werkstoffs.

Zur Herstellung der Begrenzungsschicht wird vorzugsweise ein Polyurethan-Werkstoff ausgewählt, der beim Vernetzen ausschäumt. Bei dem ausgeschäumten Werkstoff kann es sich um einen Hartschaum oder auch ein Material handeln, das energieabsorbierende Eigenschaften aufweist. Letzteres kann insbesondere bei einem Dachmodul zur Dämpfung eines Kopfaufpralls vorteilhaft sein.

Der Polyurethan umfassende Werkstoff wird in der Regel derart verarbeitet, dass ein Zweikomponentensystem in einem externen Mischkopf vermischt wird und das Gemisch anschließend mittels eines Roboters auf die betreffende Fläche aufgetragen wird. Bei Luftkontakt reagiert das System aus, d. h. es vernetzt und härtet aus. Die Reaktionszeit des Systems ist über dessen Zusammensetzung einstellbar und kann beispielsweise zwischen einer Minute und einer halben Stunde betragen. Zweckmäßig ist die Reaktionszeit aber auf etwa eine Minute eingestellt, so dass kurze Taktzeiten an der betreffenden Fertigungsstation gefahren werden können.

Das Verfahren nach der Erfindung eignet sich grundsätzlich zur Herstellung aller äußeren und inneren plattenförmigen Strukturen einer Fahrzeugkarosserie, die als Verbundbauteil ausgeführt sind. Bevorzugt kann mit dem Verfahren nach der Erfindung jedoch ein vorgefertigtes Dachmodul hergestellt werden, das in einen korrespondierend ausgebildeten Dachrahmen einer Fahrzeugkarosserie einsetzbar ist. Es ist auch denkbar, dass das Karosserieteil eine bewegte Fläche, z. B. ein Schiebedach oder eine Lamelle eines Lamellenschiebedachs bildet. Ferner kann der Träger zur Ausbildung eines Dachhimmels an der dem Fahrzeuginnenraum zugewandten Seite mit einem textilen oder folienartigen Material beschichtet sein.

Die Außenhaut des Fahrzeug-Karosserieteils kann aus einem beliebigen Werkstoff, beispielsweise aus Kunststoff, Aluminium oder Stahl bestehen und ein Tiefziehteil darstellen. Das Verfahren nach der Erfindung eignet sich jedoch insbesondere zur Herstellung eines Fahrzeug-Karosserieteils mit einer Außenhaut aus Kunststoff, an deren Oberfläche sich ohne Begrenzungsschicht Strukturen des Trägers abzeichnen könnten.

Bei dem Verfahren nach der Erfindung, bei dem zur Herstellung des Trägers eine Wabenstruktur eingesetzt wird, wird die Außenhaut in die Werkzeugform eingebracht und die Wabenstruktur einseitig mit Polyurethan benetzt. Die benetzte Wabenstruktur wird dann in die Werkzeugform eingelegt. Die Werkzeugform wird dann mittels eines Oberstempels geschlossen, dessen Form keine Geometrieänderung der die Kernstruktur bildende Wabenstruktur vorgibt. Jedoch wird nun das Polyurethan vernetzt, so dass sich die Begrenzungsschicht ausbildet, die die Außenhaut mit der Wabenstruktur verbindet. Anschließend wird das Werkzeug geöffnet. Dann erfolgt in einem weiteren Verfahrensschritt ein erneuter Polyurethan-Eintrag. Es wird nun ein zweiter Oberstempel eingesetzt, der die Form der Kernstruktur und damit die Innenkontur des Trägers vorgibt.

Denkbar ist es auch, das vorstehend beschriebene Verfahren mit anderen zu kombinieren. Insbesondere kann eine Ausführungsform, bei der ein Polyurethan/Glasfaser-Gemisch eingetragen wird, mit einer Ausführungsform kombiniert werden, bei der eine Wabenstruktur eingesetzt wird. So kann beispielsweise eine mit Glas kaschierte Wabe einer Kernstruktur zur Anwendung kommen, welche an der der Außenhaut zugewandten Seite mit Polyurethan und an der der Außenhaut abgewandten Seite mit einem Polyurethan/Glasfaser-Gemisch beauftragt wird. Durch eine geeignete Kombination der verschiedenen Ausführungsformen können einzelne Bereiche des Karosserieteils funktionsabhängig gestaltet werden. Beispielsweise kann in einem flächigen Bereich ausschließlich eine Kernstruktur mit einer Wabenstruktur, beispielsweise nach einem PHC-Verfahren, und für insbesondere rahmenartig ausgeführte Versteifungen, Dome zum Befestigen von Anbauteilen, wie Haltegriffen oder einer Beleuchtung oder dergleichen, zusätzlich eine Kernstruktur erzeugt werden, die aus einem Polyurethan/Glasfaser-Gemisch gebildet ist und nach einem LFI-Verfahren hergestellt wird.

Weitere Vorteile und vorteilhafte Ausgestaltungen des Gegenstandes nach der Erfindung sind der Beschreibung, der Zeichnung und den Patentansprüchen entnehmbar.

Acht Ausführungsbeispiele eines nach dem erfindungsgemäßen Verfahren hergestellten Fahrzeug-Karosserieteils sind in der Zeichnung schematisch vereinfacht dargestellt. Es zeigt
- Fig. 1: eine schematische Teilansicht eines Personenkraftwagens mit einem Dachmodul;
- Fig. 2: einen Schnitt durch ein Dachmodul, das nicht vom Schutzbereich des Patentanspruchs erfasst ist;
- Fig. 3: einen Schnitt durch eine alternative Ausführungsform eines Dachmoduls, das nicht vom Schutzbereich des Patentanspruchs erfasst ist;
- Fig. 4a bis c: die Herstellung einer dritten Ausführungsform eines Dachmoduls, die nicht vom Schutzbereich des Patentanspruchs erfasst ist;
- Fig. 5a bis c: die Herstellung einer vierten Ausführungsform eines Dachmoduls, die nicht vom Schutzbereich des Patentanspruchs erfasst ist;
- Fig. 6a und b: die Herstellung einer fünften Ausführungsform eines Dachmoduls, die nicht vom Schutzbereich des Patentanspruchs erfasst ist;
- Fig. 7a und b: die Herstellung eines Dachmoduls nach dem erfindungsgemäßen Verfahren;
- Fig. 8a bis c: die Herstellung einer weiteren Ausführungsform eines Dachmoduls, die nicht vom Schutzbereich des Patentanspruchs erfasst ist; und
- Fig. 9a bis c: die Herstellung einer weiteren Ausführungsform eines Dachmoduls, die nicht vom Schutzbereich des Patentanspruchs erfasst ist.

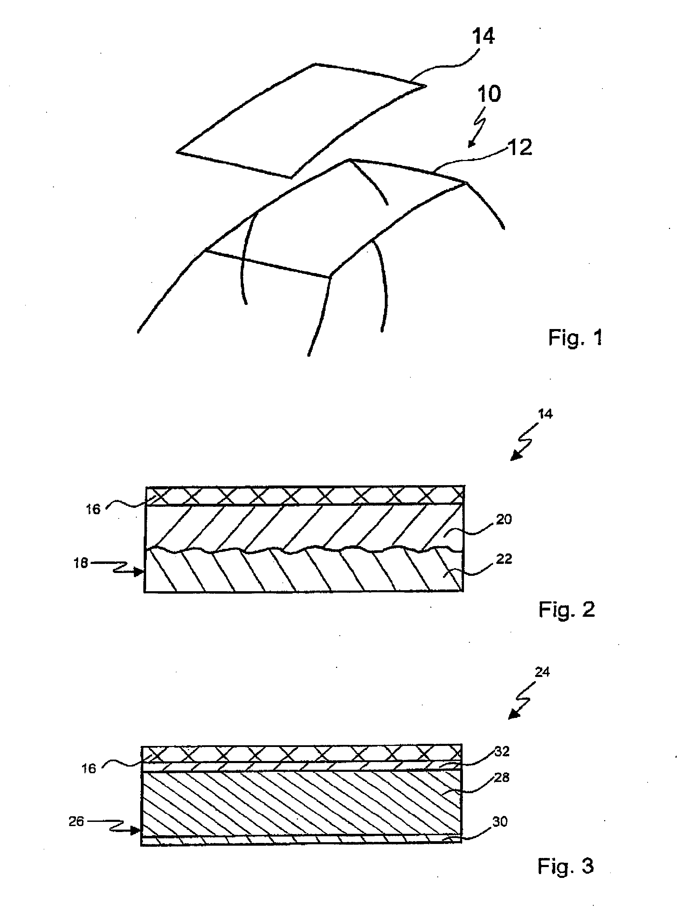

In Fig. 1 ist ein als Personenkraftwagen ausgebildetes Kraftfahrzeug 10 dargestellt, dessen Karosserie einen Dachrahmen 12 aufweist, in den ein nach einem erfindungsgemäßen Verfahren hergestelltes, vormontiertes Dachmodul 14 einsetzbar ist, das einen Fahrzeuginnenraum überdeckt. Die Verbindung zwischen dem Dachmodul 14 und dem Dachrahmen 12 erfolgt über eine hier nicht näher dargestellte, umlaufende Kleberaupe.

In Fig. 2 ist ein Schnitt durch das in Fig. 1 dargestellte Dachmodul 14 gezeigt, das vor dem Einsetzen in den Dachrahmen 12 vorgefertigt ist.

Das Dachmodul 14, das ein Verbundbauteil darstellt, wird derart hergestellt, dass eine die außenliegende Oberfläche des Dachmoduls 14 bildende Außenhaut 16 in ein Formwerkzeug eingelegt wird, woraufhin eine Trägerstruktur 18 gefertigt wird, und zwar derart, dass in einem ersten Verfahrensschritt eine erste Lage 20 aus einem Polyurethan/Glasfaser-Gemisch und sofort im Anschluss daran in einem zweiten Verfahrensschritt eine zweite Lage 22 aus einem Polyurethan/Glasfaser-Gemisch eingetragen wird. Anschließend wird das Werkzeug geschlossen, woraufhin die beiden Materiallagen 20 und 22 unter Vernetzung ausreagieren bzw. aushärten, so dass die Materiallage 20 eine Begrenzungsschicht bildet, über die die eine Kernstruktur darstellende und die Innenkontur des Dachmoduls 14 bildende Materiallage 22 an die Außenhaut 16 angebunden wird.

Die Polyurethan/Glasfaser-Gemische der beiden Materiallagen 20 und 22 können die gleichen oder auch unterschiedliche Eigenschaften aufweisen.

In Fig. 3 ist ein Dachmoduls 24 dargestellt, welches ebenfalls eine aus Kunststoff, wie beispielsweise ASA-PC gefertigte Außenhaut 16 aufweist. Die Außenhaut 16 ist auf einem Träger 26 angeordnet.

Der Träger 26 des Dachmoduls 24 umfasst eine aus einer Papierwabe hergestellte Kernstruktur 28, an dessen der Außenhaut 16 abgewandten Seite eine Polyurethanschicht 30 angeordnet ist, in der eine Wirrglasmatte eingebettet ist. Zwischen der Kernstruktur 28, die die Formgebung der dem Fahrzeuginnenraum zugewandten Seite des Dachmoduls 24 vorgibt, und der Außenhaut 16 ist eine Begrenzungsschicht 32 angeordnet, die aus Polyurethan besteht und in der ebenfalls eine Wirrglasmatte eingebettet ist.

Die Herstellung des Dachmoduls 24 erfolgt derart, dass die Außenhaut 24 in eine Werkzeug-form eingelegt wird und die mit den Wirrglasmatten belegte Wabe 28 auf beiden Seiten jeweils mit Polyurethan besprüht wird, wobei sich die beiden Polyurethan-Systeme unterscheiden. Die besprühte und mit den Wirrglasmatten belegte Wabe wird dann in das Werkzeug eingelegt, und zwar bevor eine Reaktion der Polyurethan-Systeme erfolgt ist. Dann wird das Werkzeug geschlossen und die beiden Polyurethan-Systeme reagieren aus, so dass eine Vernetzung abläuft und über die Begrenzungsschicht 32 eine Anbindung des Trägers 26 an die Außenhaut 16 erfolgt. Die Begrenzungsschicht 32 hat elastische Eigenschaften, so dass ausgeschlossen ist, dass sich die Struktur der Wabe 28 an der Oberfläche der Außenhaut 16 abzeichnet.

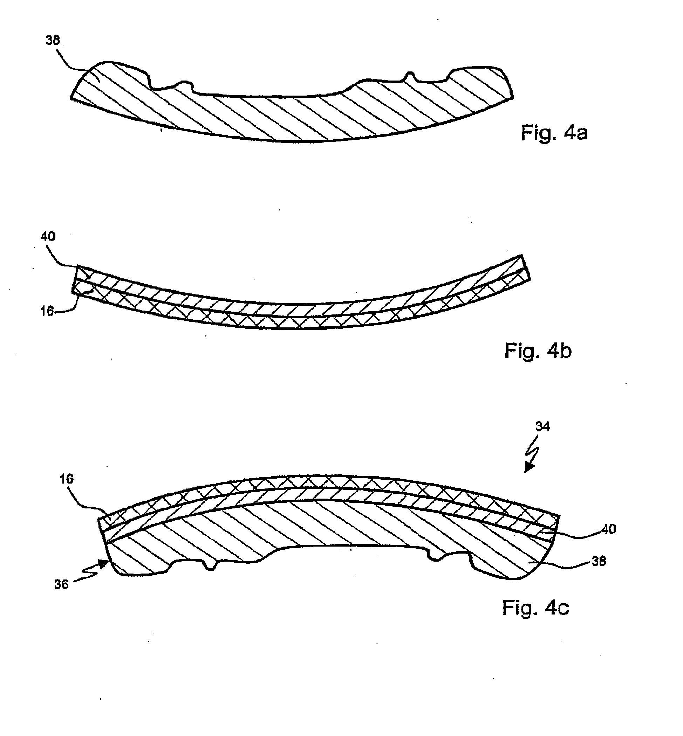

Anhand der Figuren 4a bis 4c ist die Herstellung eines weiteren Dachmoduls 34 dargestellt, dessen fertiger Zustand Figur 4c zu entnehmen ist und das einen die Innenkontur des Dachmoduls vorgebenden Träger 36 aufweist, dem eine Kernstruktur 38 zugeordnet ist, die über eine Begrenzungsschicht 40 mit einer aus Kunststoff bestehenden Außenhaut 16 verbunden ist. Die Kernstruktur 38 und die Begrenzungsschicht 40 sind jeweils aus einem Polyurethan/Glasfaser-Gemisch gefertigt.

Zur Fertigung des Dachmoduls 34 wird zunächst die in Fig. 4a dargestellte Kernstruktur 38 nach einem LFI-Verfahren in einem Werkzeug mit einer entsprechenden Kavität hergestellt, die die erforderlichen Geometrien bzw. Dickenänderungen vorgibt. Anschließend wird in einem weiteren Verfahrensschritt eine die Außenhaut 16 bildende, tiefgezogene Kunststofffolie in ein zweites Werkzeug eingelegt und ein Polyurethan/Glasfaser-Gemisch auf die Innenseite der Außenhaut 16 aufgetragen, wie Fig. 4b zu entnehmen ist. Die zuvor gefertigte Kernstruktur 38 wird an einem Oberwerkzeug des Werkzeuges befestigt und bei geschlossenem Werkzeug durch eine Vernetzungsreaktion des aus dem Polyurethan/Glasfaser-Gemisch bestehenden Werkstoffs unter Ausbildung der Begrenzungsschicht 40 mit der Außenhaut 16 verbunden. Die Begrenzungsschicht 40 stellt mithin eine Klebeschicht zwischen der Kernstruktur 38 und der Außenhaut 16 dar.

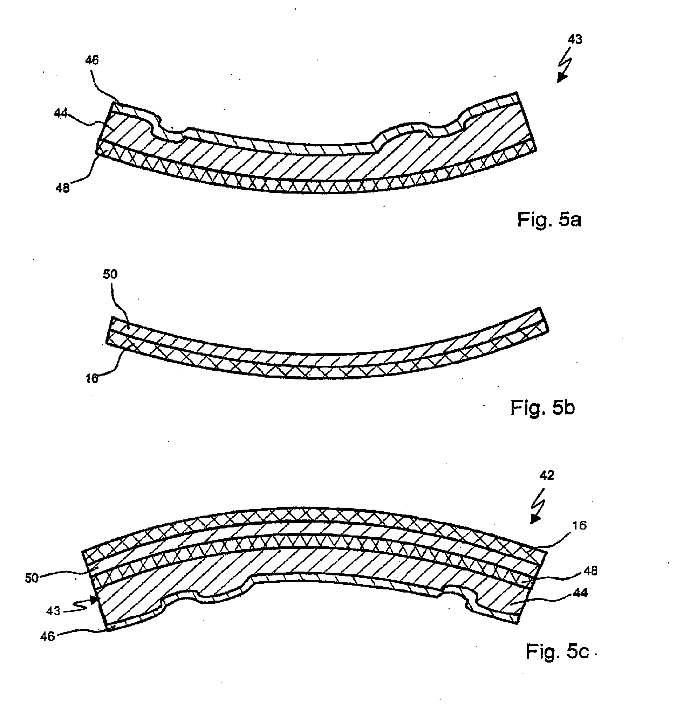

Anhand der Figuren 5a bis 5c ist die Herstellung eines weiteren Dachmoduls 42 dargestellt, dessen fertiger Zustand Figur 5c zu entnehmen ist. Das Dachmodul 42 umfasst eine Außenhaut 16, die mit einem Träger 43 verbunden ist, der eine aus einer Papierwabe hergestellte Kernstruktur 44 aufweist, die beidseits von einer Polyurethanschicht 46 bzw. 48 begrenzt ist. Zwischen der der Außenhaut 16 zugewandten Polyurethanschicht 48 und der Außenhaut 16 ist eine Begrenzungsschicht 50 angeordnet, die ebenfalls aus einem Polyurethan-System gebildet ist.

Zur Herstellung des Dachmoduls 42 wird die Kernstruktur 44 zusammen mit den Polyurethanschichten 46 und 48 in einem entsprechenden Werkzeug derart geformt, dass sie alle erforderlichen Geometrien und Dickenänderungen aufweist, wie Fig. 5a zu entnehmen ist. Anschließend wird in einem nachfolgenden Verfahrensschritt eine die Außenhaut 16 bildende, tiefgezogene Kunststofffolie in ein zweites Werkzeug eingelegt und mit einem Polyurethan umfassenden Werkstoff beschichtet, der zur Ausbildung der Begrenzungsschicht 50 dient (vgl. Fig. 5b). Anschließend wird vor dem Ausreagieren des die Begrenzungsschicht 50 ausbildenden Werkstoffs der Träger 43 über ein Oberwerkzeug an den Werkstoff 50 herangeführt, so dass das Werkzeug geschlossen wird. Es erfolgt dann eine Vernetzungsreaktion, so dass die Außenhaut 16 über die Begrenzungsschicht 50 mit dem Träger 43 verbunden wird. Die Begrenzungsschicht 50 dient mithin als Klebeschicht zwischen dem Träger 43 und der Außenhaut 16.

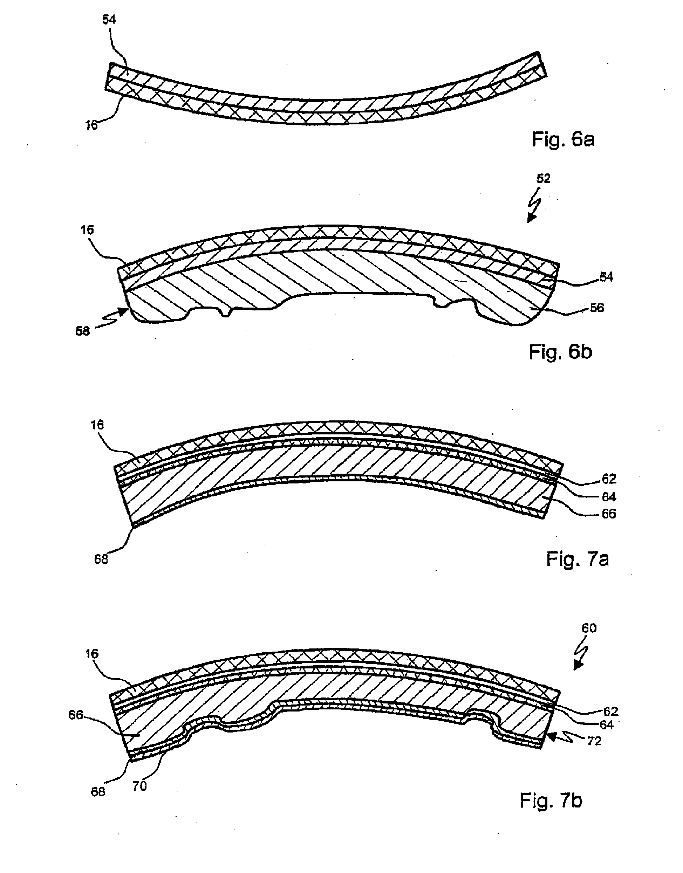

Anhand der Figuren 6a und 6b ist die Herstellung eines weiteren Dachmoduls 52 dargestellt, dessen fertiger Zustand Fig. 6b zu entnehmen ist.

Zur Herstellung des Dachmoduls 52 wird in einem ersten Schritt eine eine Außenhaut bildende Kunststofffolie 16 in eine Werkzeugform eingelegt. Auf die Kunststofffolie 16 wird dann ein Polyurethan/Glasfaser-Gemisch nach einem LFI-Verfahren aufgetragen. Daraufhin wird das Werkzeug mittels eines Oberstempels geschlossen, dessen Kontur im Wesentlichen parallel zur Innenkontur der Außenhaut 16 verläuft. Es bildet sich dann durch Vernetzung des Polyurethan/Glasfaser-Gemischs eine Begrenzungsschicht 54 aus (vgl. Fig. 6a). Dann wird das Werkzeug geöffnet, woraufhin ein erneuter Eintrag eines Polyurethan/Glasfaser-Gemisches erfolgt. Das Werkzeug wird dann mittels eines zweiten Oberstempels geschlossen, dessen Kontur mit der Kontur korrespondiert, die eine Kernstruktur 56 aufweist, die aus dem zweiten Polyurethan/Glasfaser-Gemisch gebildet ist. Die Kernstruktur 56 und Begrenzungsschicht 54 bilden einen Träger 58 für die Außenhaut 16.

Anhand der Figuren 7a und 7b ist die Herstellung eines Dachmoduls 60 nach dem erfindungsgemäßen Verfahren dargestellt, dessen fertiger Zustand Fig. 7b zu entnehmen ist. Das Dachmodul 60 wird derart hergestellt, dass zunächst eine Außenhaut 16 in ein Werkzeug eingelegt und anschließend ein mit einer Polyurethanschicht 62 und mit einer Glaskaschierung 64 versehener Wabenkern 66 in das Werkzeug eingebracht wird. Die Glaskaschierung 64 wurde zuvor mit Polyurethan getränkt, das der Übersichtlichkeit als separate Schicht dargestellt ist. An seiner der Außenhaut 16 abgewandten Seite ist der Wabenkern 66 ebenfalls mit einer Glaskaschierung 68 versehen. Dann wird das Werkzeug geschlossen, und zwar mit einem Oberstempel, der keine Konturänderungen des Wabenkerns 66 bzw. der Glaskaschierung 68 vornimmt. Daraufhin vernetzt die Polyurethanschicht 62 zu einer Begrenzungsschicht, so dass der Wabenkern 66 an die Außenhaut 16 angebunden wird (vgl. Fig. 7a). Anschließend wird das Werkzeug geöffnet und es erfolgt ein Polyurethaneintrag auf die Glaskaschierung 68, woraufhin das Werkzeug mit einem zweiten Oberstempel geschlossen wird, der eine Formgebung der Innenseite des Dachmoduls 60 vornimmt, wobei die Polyurethanschicht 70 vernetzt bzw. aushärtet (vgl. Fig. 7b). Die Begrenzungsschicht 62, die Glaskaschierung 64, der Wabenkern 66, die Glaskaschierung 68 und die Polyurethanschicht 70 bilden einen Träger 72 für die Außenhaut 16, wobei der Wabenkern 66 eine Kernstruktur darstellt.

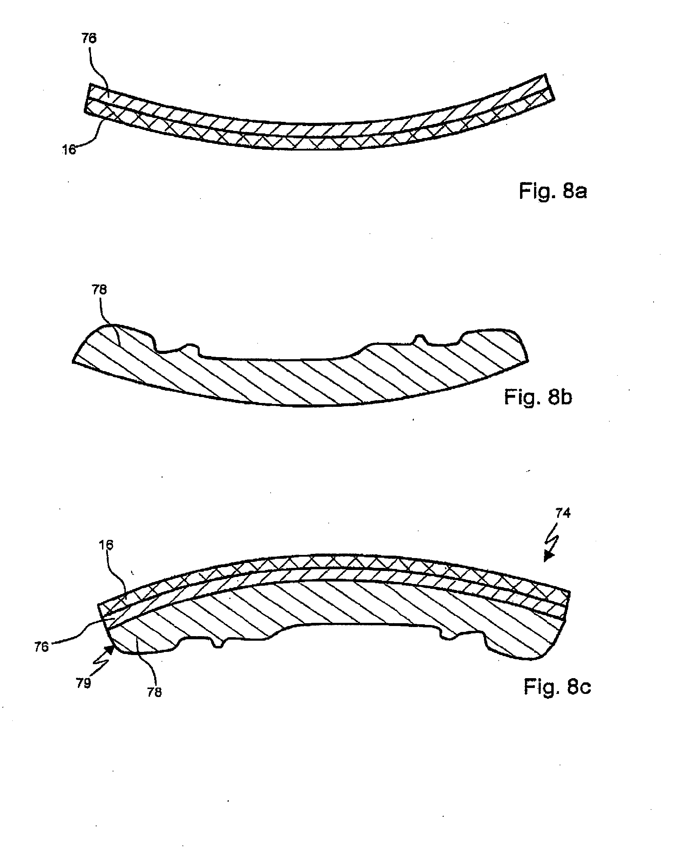

Anhand der Figuren 8a bis 8c ist die Herstellung eines weiteren Dachmoduls 74 dargestellt, das aus einer Außenhaut 16, einer Begrenzungsschicht 76 und einer Kernstruktur 78 besteht. Zur Herstellung des Dachmoduls 74 wird in einem ersten Verfahrensschritt die Außenhaut 16 in ein Werkzeug eingelegt, woraufhin ein Eintrag eines Polyurethan/Glasfaser-Gemisches erfolgt und das Werkzeug geschlossen wird. Daraufhin vernetzt das Polyurethan/Glasfaser-Gemisch zu einer Begrenzungsschicht 76 (vgl. Fig. 8a). In einem zweiten Formwerkzeug wird in einer Kavität entsprechender Formgebung die Kernstruktur 78 hergestellt, und zwar ebenfalls aus einem Polyurethan/Glasfaser-Gemisch. Anschließend wird die Kernstruktur 78 mittels eines Klebers auf die Begrenzungsschicht 76 aufgeklebt. Die Kernstruktur 78 bildet dann zusammen mit der Begrenzungsschicht 76 einen Träger 79 für die Außenhaut 16.

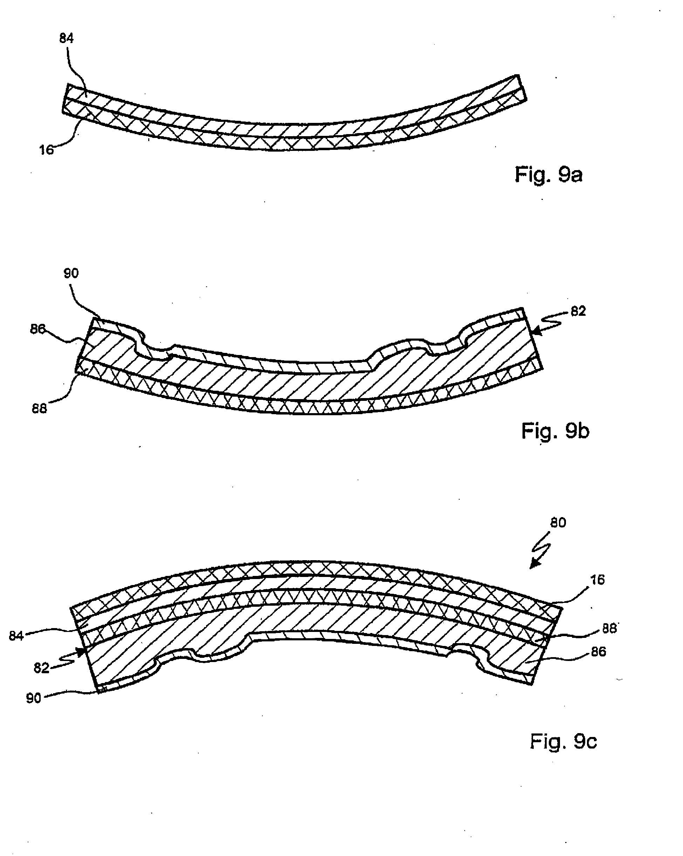

Anhand der Figuren 9a bis 9c ist die Herstellung eines weiteren Dachmoduls 80 dargestellt, das aus einer Trägerstruktur 83 besteht, die über eine Begrenzungsschicht 84 mit der Innenseite einer Außenhaut 16 verbunden ist. In einem ersten Herstellungsschritt wird die Außenhaut 16 in ein Werkzeug eingelegt und mit Polyurethan beschichtet, so dass sich durch Vernetzung des Werkstoffs die Begrenzungsschicht 84 ausbildet (vgl. Fig. 9a). In einem zweiten Werkzeug wird eine Kernstruktur hergestellt, die aus einer Papierwabe 86 besteht, die beidseits von einer Polyurethanschicht 88 bzw. 90 begrenzt ist und deren Geometrie die dem Fahrzeuginnenraum zugewandte Oberflächenstruktur festlegt (vgl. Fig. 9b). Anschließend wird die mit den beiden Polyurethanschichten 88 und 90 versehene Wabenstruktur 86 mit der Begrenzungsschicht 84 verklebt (vgl. Fig. 9c).

Bei den zuvor beschriebenen Ausführungsbeispielen, die eine oder mehrere, aus einem Polyurethan/Glasfaser-Gemisch gebildete Schichten aufweisen, kann durch die Einstellung des jeweiligen Glasfasergehalts des Weiteren Einfluss auf das Temperaturverhalten des betreffenden Karosserieteils genommen werden.

Bei den Ausführungsbeispielen, die mehrere Schichten aus einem Polyurethan/Glasfaser-Gemisch aufweisen, kann es des Weiteren vorteilhaft sein, unterschiedliche Gemischsysteme einzusetzen, um eine gute Anpassung an das vorliegende Anforderungsprofil zu gewährleisten.

### Bezugszeichen

- 10: Kraftfahrzeug
- 12: Dachrahmen
- 14: Dachmodul
- 16: Außenhaut
- 18: Träger
- 20: Begrenzungsschicht
- 22: Kernstruktur
- 24: Dachmodul
- 26: Träger
- 28: Kernstruktur
- 30: Polyurethanschicht
- 32: Begrenzungsschicht
- 34: Dachmodul
- 36: Träger
- 38: Kernstruktur
- 40: Begrenzungsschicht
- 42: Dachmodul
- 43: Träger
- 44: Kernstruktur
- 46: Polyurethanschicht
- 48: Polyurethanschicht
- 50: Begrenzungsschicht
- 52: Dachmodul
- 54: Begrenzungsschicht
- 56: Kernstruktur
- 58: Träger
- 60: Dachmodul
- 62: Begrenzungsschicht
- 64: Glaskaschierung
- 66: Kernstruktur
- 68: Glaskaschierung
- 70: Polyurethanschicht
- 72: Träger
- 74: Dachmodul
- 76: Begrenzungsschicht
- 78: Kernstruktur
- 80: Dachmodul
- 82: Träger
- 84: Begrenzungsschicht
- 86: Kernstruktur
- 88: Polyurethanschicht
- 90: Polyurethanschicht

## Patentansprüche

1. Verfahren zur Herstellung eines Fahrzeug-Karosserieteils (60), insbesondere eines Fahrzeugdachs, das ein Verbundbauteil ist, das eine Außenhaut (16) und einen Träger (72) umfasst, bei welchem Verfahren die Außenhaut (16) in ein Werkzeug eingelegt und dann mit dem Träger (72) verbunden wird, wobei in einer Werkzeugform zur Ausbildung einer Begrenzungsschicht (62) an der Innenseite der Außenhaut (16) ein Polyurethan umfassender Werkstoff angeordnet und vernetzt wird und über die Begrenzungsschicht (62) eine eine Innenkontur des Trägers vorgebende Kernstruktur (66) des Trägers (72) an die Außenhaut (16) angebunden wird, **dadurch gekennzeichnet, dass** eine der Kernstruktur zugeordnete Wabenstruktur (66) in der Werkzeugform unter Verwendung eines ersten Oberstempels durch Vernetzung des die Begrenzungsschicht (62) ausbildenden Werkstoffs mit der Außenhaut (16) verbunden wird und anschließend unter Verwendung eines zweiten Oberstempels der Werkzeugform an der der Außenhaut (16) abgewandten Seite der Wabenstruktur (66) eine Oberflächenkontur der Kernstruktur (66) hergestellt und eine Polyurethan umfassende Schicht (70) angeformt wird.

## Claims

1. Method for manufacturing a vehicle body part (60), in particular a vehicle roof, which is a composite component comprising an outer skin (16) and a support (72), in which method the outer skin (16) is inserted into a mould and then joined to the support (72), wherein, in a mould for forming a boundary layer (62) on the inner side of the outer skin (16), a polyurethane-comprising material is arranged and crosslinked and a core structure (66) of the support (72) which predefines an inner contour of the support is bonded to the outer skin (16) by way of the boundary layer (62), **characterized in that** a honeycomb structure (66) assigned to the core structure is joined to the outer skin (16) in the mould using a first upper die by crosslinking the material which forms the boundary layer (62), and then a surface contour of the core structure (66) is produced and a polyurethane-comprising layer (70) is moulded on that side of the honeycomb structure (66) which is remote from the outer skin (16) using a second upper die of the mould.

## Revendications

1. Procédé pour la fabrication d'une pièce de carrosserie (60) d'un véhicule, notamment d'un toit de véhicule, qui constitue un composant composite qui comprend un panneau extérieur (16) et un support (72), dans lequel procédé, le panneau extérieur (16) est introduit dans un outil et est ensuite assemblé au support (72), un matériau comprenant du polyuréthane étant disposé et réticulé dans un moule d'outil pour réaliser une couche limite (62) au niveau du côté intérieur du panneau extérieur (16) et une structure de noyau (66) du support (72) prédéfinissant un contour intérieur du support étant reliée au panneau extérieur (16) par le biais de la couche limite (62), **caractérisé en ce qu'**une structure en nid d'abeilles (66) associée à la structure de noyau dans le moule d'outil est connectée au panneau extérieur (16) en utilisant un premier poinçon supérieur par réticulation du matériau constituant la couche limite (62) et ensuite, en utilisant un deuxième poinçon supérieur du moule d'outil au niveau du côté de la structure en nid d'abeilles (66) opposé au panneau extérieur (16), un contour de surface de la structure de noyau (66) est créé et une couche (70) comprenant du polyuréthane est formée.
